# EUROPÄISCHE PATENTSCHRIFT

(11) **EP 3 717 322 B1**
(45) Veröffentlichungstag und Bekanntmachung des Hinweises auf die Patenterteilung: **09.11.2022**
(21) Anmeldenummer: 18779302.1
(22) Anmeldetag: 20.09.2018
(51) Int. Cl.: B60T 17/22, B60T 8/40

(54) **VERFAHREN ZUR FUNKTIONSPRÜFUNG EINER ELEKTROMECHANISCHEN FÜLLSTANDÜBERWACHUNGSEINRICHTUNG**
METHOD FOR THE FUNCTIONAL TESTING OF AN ELECTROMECHANICAL LEVEL-MONITORING DEVICE
PROCÉDÉ DE VÉRIFICATION DE FONCTIONNEMENT D'UN DISPOSITIF ÉLECTROMÉCANIQUE DE SURVEILLANCE DE NIVEAU DE REMPLISSAGE

(30) Priorität: 30.11.2017 DE 102017221478
(43) Veröffentlichungstag der Anmeldung: 07.10.2020
(73) Patentinhaber: Robert Bosch GmbH, 70442 Stuttgart (DE)
(72) Erfinder: WALTER, Klaus, 74321 Bietigheim-Bissingen (DE); KINDER, Ralf, 74360 Auenstein (DE); KISTNER, Matthias, 74626 Bretzfeld (DE); ZIEGLER, Peter, 71723 Grossbottwar (DE)
(86) Internationale Anmeldenummer: PCT/EP2018/075428
(87) Internationale Veröffentlichungsnummer: WO 2019/105628

(56) Entgegenhaltungen:
- DE-A1- 2 726 465
- DE-A1-102015 225 057
- DE-B4-112008 002 155
- JP-A- 2009 113 605

## Beschreibung

### Stand der Technik

Die Erfindung geht aus von einem Verfahren zur Funktionsprüfung einer elektromechanischen Füllstandüberwachungseinrichtung nach den Merkmalen des Oberbegriffs des Anspruchs 1.

Füllstandüberwachungseinrichtungen werden seit vielen Jahren in Kraftfahrzeugen verbaut, um einen niedrigen Stand an Bremsflüssigkeit in einem Bremsflüssigkeitsvorratsbehälter rechtzeitig zu erkennen und ggf. einem Fahrer anzuzeigen.

Der Anmelderin bekannte Füllstandüberwachungseinrichtungen weisen hierfür einen im Bremsflüssigkeitsvorratsbehälter angeordneten Schwimmer auf, der einen Magneten trägt. Dieser Schwimmer bewegt sich in Abhängigkeit des Füllstands des Bremsflüssigkeitsvorratsbehälters an einem mit einem Schaltkontakt, bspw. einem Reed-Kontakt, bestückten Sensorelement entlang. Sobald der Füllstand unter eine Mindestmarke absinkt, wird vom Magneten im Sensorelement ein Schaltvorgang ausgelöst, welcher bewirkt, dass von einem elektronischen Steuergerät ein Warnsignal an einen Fahrer abgesetzt wird. Als Warnsignale sind optische, akustische und/oder haptische Signale üblich. Auch kontinuierlich wirkende Füllstandüberwachungseinrichtungen sind der Anmelderin bekannt. Diese weisen ein vom Schwimmer betätigtes Potentiometer auf, dessen Widerstand sich in Abhängigkeit der Schwimmerposition und damit des Füllstands des Bremsflüssigkeitsvorratsbehälters verändert.

Unter üblichen Betriebsbedingungen befindet sich der Flüssigkeitsstand in einer Druckmittelkammer über lange Zeit hinweg oberhalb der erwähnten Minimummarke und der Schwimmer bewegt sich nur innerhalb eines relativ kleinen Hubbereichs. Folglich wird kein Schaltvorgang am Schaltkontakt bzw. keine Widerstandsänderung am Potentiometer ausgelöst und die Füllstandüberwachungseinrichtung gibt ordnungsgemäß ein Signal ab, das den ausreichend hohen Füllstand repräsentiert.

Tritt jedoch der Fall ein, dass der Schwimmer beispielsweise mechanisch blockiert ist und deshalb einer potentiellen Füllstandabnahme nicht mehr folgen kann bzw. dass das Sensorelement festgesessene Kontakte hat, so kann eine unter das Mindestvolumen abgesunkener Füllstand nicht mehr ohne Weiteres erkannt werden und das Warnsignal an den Fahrer bleibt aus.

Im Extremfall könnte dadurch Gas aus der Atmosphäre in den Hydraulikkreis eindringen oder es könnte letztlich der Aufbau eines Bremsdrucks durch einen Druckerzeuger gefährdet werden, ohne dass dies bemerkt werden würde. Dies ist besonders kritisch bei sogenannten Fremdkraftbremsanlagen, die unabhängig vom Fahrer Bremsdruck aufbauen und darüber hinaus als offene Systeme ausgebildet sind, d.h. als Bremssysteme deren Bremsdruckerzeuger direkt aus einer Druckmittelkammer eines Vorratsbehälters mit Druckmittel versorgt ist.

Als Stand der Technik können die Patentschriften JP 2009 113605 A und DE 11 2008 002155 B4 zitiert werden.

### Offenbarung der Erfindung

Mit dem der Erfindung zugrundeliegenden Verfahren zur Funktionsprüfung einer elektromechanischen Füllstandüberwachungseinrichtung wird vermieden, dass Funktionsausfälle dieser Füllstandüberwachungseinrichtung längere Zeit unerkannt bleiben.

Dazu wird gemäß dem vorgeschlagenen Verfahren durch eine gezielte Absenkung des Füllstands einer ersten und mit einer Füllstandüberwachungseinrichtung bestückten Druckmittelkammer ein Ansprechen des Bremsflüssigkeitsschalters provoziert und der dabei von der Füllstandüberwachungseinrichtung abgegebene Signalverlauf beobachtet. Findet im Beobachtungszeitraum in Abhängigkeit des Funktionsprinzips eines Sensors der Füllstandüberwachungseinrichtung ein Signalsprung oder zumindest eine stetig verlaufende Signaländerung statt, kann auf eine ordnungsgemäße Funktion der Füllstandüberwachungseinrichtung geschlossen und die Ausgabe eines Warnsignals im Steuergerät unterdrückt werden, während ein ausbleibender Signalsprung bzw. eine unstetige bzw. diskontinuierliche Signaländerung als Fehlfunktion der Füllstandüberwachungseinrichtung interpretierbar ist und ein solches Warnsignal auslöst.

Das Verfahren kann immer dann durchgeführt werden, wenn im Hydraulikkreis keine Druckmittelförderung stattfindet, also wenn die Druckmittelfördereinrichtung nicht zur Bremsdruckerzeugung angesteuert bzw. betätigt wird. Bei einem Kraftfahrzeug kann das Verfahren beispielsweise routinemäßig immer nach einem Start des Fahrzeugantriebs bzw. nach einer Inbetriebnahme des Fahrzeugs im Anschluss an eine Stillstandphase durchgeführt werden.

Die erwähnte Absenkung des Füllstands in einer ersten Druckmittelkammer kann anhand einer Druckmittelfördereinrichtung vorgenommen werden, die üblicher Weise ohnehin in einem Hydraulikkreis vorhanden ist. Insbesondere Bremskreise elektronisch schlupfregelbarer Fahrzeugbremsanlagen sind mit Druckerzeugern bzw. Druckmittelfördereinrichtungen ausgestattet, welche sich hierfür nutzen lassen. Darüber hinaus sind lediglich geringe weitere Modifikationen an derartigen Bremskreisen erforderlich, um das vorgeschlagene Verfahren durchführen zu können. Beispielsweise muss eine zweite Druckmittelkammer vorgesehen werden in die das Druckmittel aus der ersten Druckmittelkammer gepumpt werden kann.

Vorteilhafter Weise sollten die beiden Druckmittelkammern über eine Ausgleichsöffnung bekannter Querschnittsfläche dauerhaft miteinander kommunizieren. Das umgepumpte Druckmittel kann dadurch selbsttätig, d.h. ohne Pumpenunterstützung über die Ausgleichsöffnung zurück in die erste Druckkammer fließen, wobei aus einer erfassbaren Dauer für den Druckmittelrücklauf ergänzende Hinweise hinsichtlich Temperatur, Viskosität und/oder Grad der Verschmutzung, also der Qualität, des Druckmittels gewonnen werden und bei der Regelung des Bremsdrucks im Bremskreis berücksichtigt werden können. Diesbezüglich besonders vorteilhaft sind Vorratsbehälter für Druckmittel die in zwei miteinander kommunizierende Druckmittelkammern geteilt sind, da sie bereits kostengünstig am Markt erhältlich sind.

Weitere Vorteile oder vorteilhafte Weiterbildungen des der Erfindung zugrunde liegenden Verfahrens ergeben sich aus den Unteransprüchen und/oder aus der nachfolgenden Beschreibung.

### Zeichnungen

Ein Ausführungsbeispiel der Erfindung ist in der nachfolgenden Beschreibung detailliert erläutert und anhand der Zeichnung veranschaulicht. Gezeigt ist in
- Fig. 1: das hydraulische Layout einer elektronisch schlupfregelbaren Fremdkraft bremsanlage eines Kraftfahrzeugs;
- Fig.2: einen schemtaisch vereinfacht dargestellten Druckmittelkreis und
- Fig.3: das der Erfindung zugrunde liegende Verfahren anhand eines Ablaufdiagramms.

### Beschreibung der Ausführungsbeispiele der Erfindung

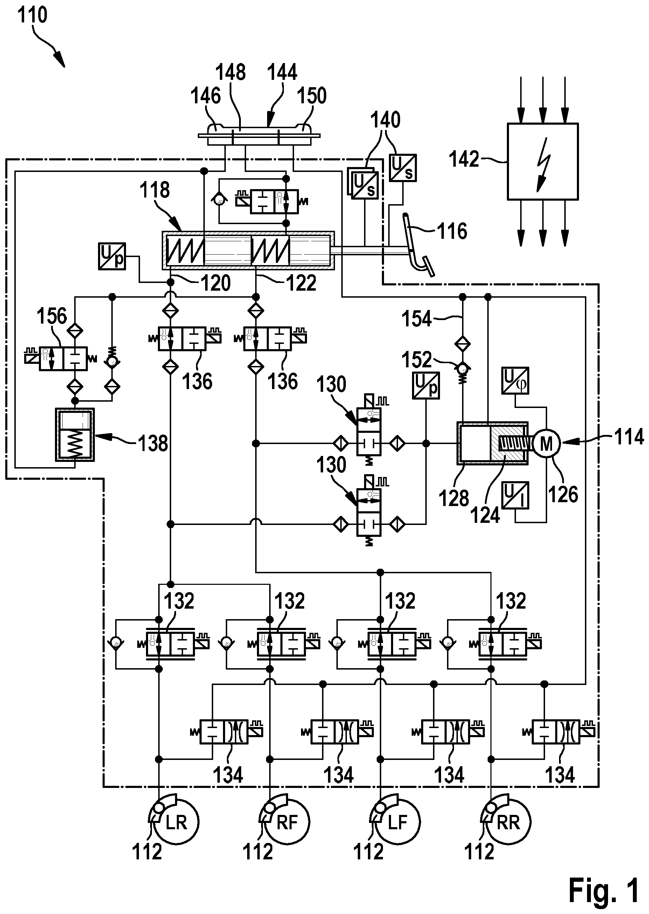

Figur 1 zeigt exemplarisch das hydraulisches Layout einer Fahrzeugbremsanlage 110. Bei dieser Fahrzeugbremsanlage 110 handelt es sich um eine Fremdkraftbremsanlage, also um eine Fahrzeugbremsanlage, bei der im störungsfreien Normalbetrieb der Bremsdruck an den Radbremsen 112 nicht durch Muskelkraft des Fahrers, sondern durch einen Druckerzeuger 114 bereitgestellt wird, welcher dazu elektromotorisch antreibbar ausgestaltet ist. Die dargestellte Fahrzeugbremsanlage 110 umfasst einen per Bremspedal 116 vom Fahrer betätigbaren Hauptbremszylinder 118 an den zwei Bremskreise 120, 122 angeschlossen sind. Beide Bremskreise 120, 122 versorgen jeweils zwei zugeordnete Radbremsen 112 mit Druckmittel. Anhand des Hauptbremszylinders 118 wird unter Normalbedingungen lediglich ein Bremswunsch des Fahrers erfasst, nur bei einer vorliegenden Funktionsstörungen kann der Fahrer über den Hauptbremszylinder 118 die Radbremsen 112 mit Bremsdruck beaufschlagen. Im Standardbetrieb der Fahrzeugbremsanlage 110 werden demnach die Radbremsen 112 mit einem vom Druckerzeuger 114 bereitgestellten Bremsdruck beaufschlagt. Dieser Druckerzeuger 114 ist dem Hauptbremszylinder 118 hydraulisch parallel geschaltet. Es handelt sich bei diesem Druckerzeuger 118 um einen Plungerkolben 124, der von einem elektronisch ansteuerbaren Antriebsmotor 126 zu einer Axialbewegung in einem Zylinder 128 antreibbar ist. Eine Rotationsbewegung des Antriebsmotors 126 wird dazu mittels eines Spindeltriebs in eine Axialbewegung gewandelt und auf den Plungerkolben 124 übertragen. Das vom Plungerkolben 124 geförderte Druckmittel wird in die Bremskreise 120, 122 verdrängt und bewirkt damit einen Bremsdruckaufbau. Die Bremskreise 120, 122 können bei Bedarf über Sperrventile 130 vom Plungerkolben 124 getrennt werden, wobei diese Sperrventile 130 elektronisch ansteuerbar ausgebildet sind. Zur einer radindividuellen Anpassung des Bremsdrucks an die jeweils an einem zugeordneten Rad vorherrschenden Schlupfverhältnisse ist jedem Rad eine Modulationseinrichtung aus einem elektronisch ansteuerbaren Druckaufbauventil 132 und einem ebenfalls elektronisch ansteuerbaren Druckabbauventil 134 vor- bzw. nachgeschaltet. Darüber hinaus ist in jedem der Bremskreise 120,122 ein Kreistrennventil 136 vorgesehen. Dieses Kreistrennventil 136 ist ebenfalls elektronisch ansteuerbar ausgeführt und sperrt unter Normalbedingungen eine Druckmittelverbindung zwischen dem Hauptbremszylinder 118 und den Bremskreisen 120, 122 um darin einen Bremsdruckaufbau über den Hauptbremszylinder 118 zu vermeiden.

Die Fahrzeugbremsanlage 110 ist zudem mit einem Pedalwegsimulator 138 ausgestattet. Dabei handelt es sich um eine Kolben/Zylinder-Einheit, die mittels eines Simulatorabkoppelventils 156 steuerbar mit einer der Kammern des Hauptbremszylinders 118 koppelbar ist. Der Pedalwegsimulator 138 nimmt aus dem Hauptbremszylinder 118 verdrängtes Druckmittel auf, wenn die Druckmittelverbindungen vom Hauptbremszylinder 118 zu den Bremskreisen 120,122 durch die Kreistrennventile 136 gesperrt sind und ermöglicht dann einen Pedalweg an dem vom Fahrer betätigten und den Hauptbremszylinder 118 beaufschlagenden Bremspedal 116. Pedalsensoren 140 am Bremspedal 116 erfassen diesen Pedalweg und wandeln das Wegesignal in ein Spannungssignal um, das sie einem elektronischen Steuergerät 142 der Fahrzeugbremsanlage 110 zur Verfügung stellen. Im elektronischen Steuergerät 142 wird aufgrund dieses Signals ein Bremswunsch des Fahrers erkannt und in ein Steuersignal gewandelt mit dem das elektronische Steuergerät 142 den Druckerzeuger 114 bzw. dessen Antriebsmotor 126 ansteuert. Dieser stellt daraufhin einen der Betätigung des Bremspedals 116 entsprechenden Bremsdruck an den Radbremsen 112 ein. Die den jeweiligen Bremskreisen 120, 122 zugeordneten Kammern des Hauptbremszylinders werden über einen Druckmittelvorratsbehälter 144 mit Druckmittel versorgt. Jener Druckmittelvorratsbehälter 144 ist in mehrere miteinander kommunizierende Kammern 146, 148, 150 unterteilt. Jeweils eine Kammer 146, 148 ist jeweils einem der Bremskreise 120, 122 zugeordnet, eine dritte Kammer 150 ist unmittelbar mit dem Druckerzeuger 114 verbunden.

Es ist davon auszugehen, dass der erwähnte Druckmittelvorratsbehälter 144 mit einer Füllstandüberwachungseinrichtung ausgestattet ist, die bestimmungsgemäß ein Warnsignal abgibt, wenn der Füllstand unter einen vorgebbaren Minimalwert absinkt. Weiterhin ist davon auszugehen, dass diese Füllstandüberwachungseinrichtung in der mit dem Druckerzeuger 114 verbundenen dritten Kammer 150 des Druckmittelvorratsbehälters 144 angeordnet ist.

Zur Überprüfung der Funktionstüchtigkeit dieser Füllstandsüberwachungseinrichtung wird erfindungsgemäß der Druckerzeuger 114 angesteuert. Der Druckerzeuger 114 schiebt daraufhin das in seinem Zylinder 128 vorhandene Druckmittel durch die entsprechend offenen Sperrventile 130 in die Bremskreise 120, 122 aus, bis der Plungerkolben 124 schließlich seinen äußeren Endanschlag erreicht hat. Um dabei den Aufbau eines Bremsdrucks in den Bremskreisen 120, 122 zu verhindern sind die Kreistrennventile 136 dabei derart angesteuert, dass das vom Druckerzeuger 114 geförderte Druckmittel durch sie und durch den Hauptbremszylinder 118 hindurch in wenigstens eine der beiden den Bremskreisen 120, 122 zugeordnete Kammern 146, 148 des Vorratsbehälters 144 abströmt.

Nun werden die Sperrventile 130 vom elektronischen Steuergerät 142 geschlossen um den Druckerzeuger 114 kurzzeitig von den Bremskreisen 120, 122 abzukoppeln und der Plungerkolben 124 wird durch Umkehrung seiner Antriebrichtung zurück in Richtung seines inneren Anschlags bewegt. Dabei saugt der Plungerkolben 124 über eine von einem Rückschlagventil 152 gesteuerte Leitung 154 Druckmittel aus der zugeordneten dritten Kammer 150 des Vorratsbehälters 144 in den Zylinder 128 ein. An seinem inneren Anschlag angekommen öffnen die Sperrventile 130 wieder, die Antriebsrichtung des Plungerkolbens 124 wird erneut umgekehrt, der Plungerkolben 124 überfährt den Mündungsquerschnitt der Leitung 154 und pumpt folglich ein weiteres Quantum an Druckmittel in wenigstens eine der den Bremskreisen 120, 122 zugeordneten Kammern 146, 148 des Vorratsbehälters 144 um. Dieser Vorgang wiederholt sich solange, bis die dem Druckerzeuger 114 zugeordnete dritte Kammer 150 des Vorratsbehälters 144 ihren minimalen Füllstand erreicht hat und die Füllstandüberwachungseinrichtung anspricht. Die Anzahl dazu notwendiger Betätigungszyklen bzw. die Betätigungsdauer des Druckerzeugers 114 bis zur Entleerung der Kammer 150 des Vorratsbehälters 144 auf den minimalen Füllstand lässt sich aus den bekannten geometrischen Auslegungsgrößen wie bspw. dem Volumen an verdrängtem Druckmittel pro Plungerhub; dem Volumen der dem Druckerzeuger 114 zugeordneten Kammer 150; dem Mindestfüllstandvolumen der Kammer 150; der Geschwindigkeiten des Plungerkolbens 124 in Aus- bzw. Einfahrrichtung etc. ermittelt und vom elektronischen Steuergerät 142 vorgeben. Während dieses Zeitraums wird das Signal der Füllstandsüberwachungseinrichtung im elektronischen Steuergerät 142 daraufhin überwacht, ob eine kontinuierliche Signaländerung stattfindet oder ob ein Signalsprung, wie er durch ein Ansprechen der Füllstandüberwachungseinrichtung gegen Ende des Zeitraums zu erwarten ist, erfolgt. Falls ja, kann auf eine ordnungsgemäße Funktion der Füllstandsüberwachungseinrichtung geschlossen werden und ein Warnsignal an den Fahrer wird unterdrückt. In diesem Falle wird das Verfahren zu einem späteren Zeitpunkt wiederholt, vorzugsweise nach einer längeren Stillstandzeit des Fahrzeugs oder beispielsweise ein jedes Mal wenn eine erneute Inbetriebnahme des Fahrzeugantriebs erfolgt.

Findet demgegenüber keine kontinuierliche bzw. stetige Signaländerung statt oder ist kein Signalsprung im Beobachtungszeitraum feststellbar, deutet dies auf eine Fehlfunktion der Füllstandsüberwachung hin und vom Steuergerät 142 wird ein entsprechendes Warnsignal an den Fahrer ausgegeben. Ein geeignetes Warnsignal kann ein optisches, ein akustisches und/oder ein optisches Signal sein.

Das umgepumpte Volumen an Druckmittel kann über die Ausgleichsöffnung zwischen der wenigstens einen Druckmittelkammer 146, 148 der Bremskreise 120, 122 und der Druckmittelkammer 150 des Druckerzeugers 114 selbsttätig zurückfließen bis sich die Druckmittelspiegel in den Kammern 146 - 150 wieder ausgeglichen haben. In Kenntnis der Querschnittsabmessungen dieser Druckmittelverbindung bzw. des Volumenstroms durch die Druckmittelverbindung lassen sich aus der dazu benötigten Zeit Rückschlüsse auf die Qualität des Druckmittels, beispielsweise auf dessen Viskosität, dessen Temperatur und/oder dessen Verunreinigungsgrad ziehen. Ggf. kann vom elektronischen Steuergerät 142 an den Fahrer eine Empfehlung zum Druckmitteltausch ausgegeben werden. Die dabei erfasste Zeit ist diejenige Zeit, die nach Ablauf des Beobachtungszeitraums verstreicht, bis die Füllstandüberwachungseinrichtung wieder das vor dem Beobachtungszeitraum angezeigte Signal ausgibt.

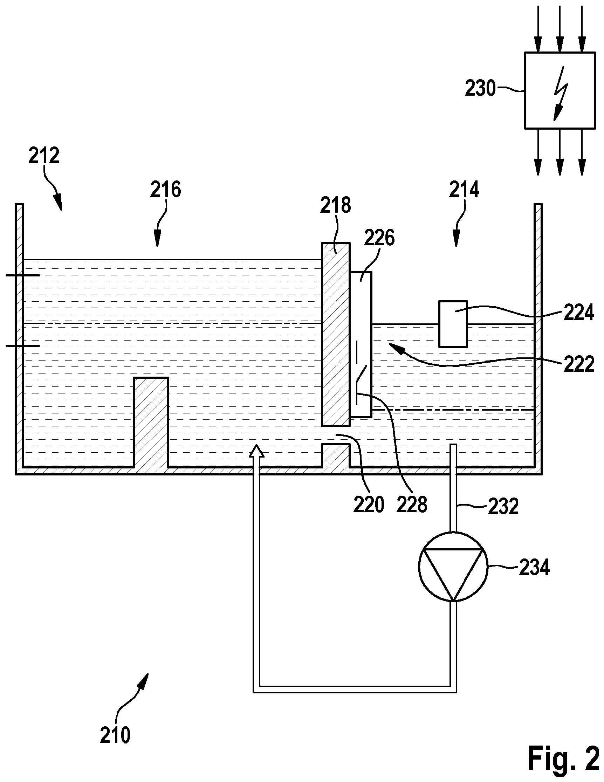

Die Figur 2 zeigt eine schematisch vereinfachten Druckmittelkreis 210 mit einem einen Druckmittelvorratsbehälter 212, dessen Speicherraum in zwei miteinander kommunizierende Druckmittelkammern 214, 216 unterteilt ist. Die beiden Druckmittelkammern 214, 216 sind dazu mittels einer Zwischenwand 218 voneinander getrennt, welche an ihrem dem Boden des Druckmittelvorratsbehälters 212 zugewandten Ende eine Ausgleichsöffnung 220 mit einem vorgegebenen Öffnungsquerschnitt aufweist. Die beiden Druckmittelkammern 214, 216 sind in ihrem jeweiligen Volumen unterschiedlich groß ausgebildet, wobei die kleinere der beiden Druckmittelkammern 214 mit einer Füllstandüberwachungseinrichtung 222 ausgestattet ist. Bei dieser Füllstandüberwachungseinrichtung 222 handelt es sich exemplarisch um einen mit einem Magneten bestückten Schwimmer 224, der entlang eines Sensorelements 226 geführt ist. Am Sensorelement 226 ist beispielsweise ein Schaltkontakt 228 an einer Stelle im Inneren der Druckmittelkammer 214 angeordnet, die eine Mindestfüllhöhe des Druckmittelvorratsbehälters 212 markiert. Der Füllstand des Druckmittelvorratsbehälters 212 sollte nicht unter diese Mindestfüllhöhe absinken. Tritt dieser Fall dennoch ein, so bewirkt der vom Schwimmer 224 getragene Magnet, dass der Schaltkontakt 228, abhängig von seiner Ausgestaltung zwei Kontakte schließt oder eine bestehende Verbindung zwischen zwei Kontakten unterbricht. Derartige Schaltkontakte 228 sind auch als Reed-Kontakte bekannt. Alternativ zu Schaltkontakten 228 kann der Schwimmer 224 auch zur einer Betätigung eines am Sensorelement 226 befestigten Potentiometers dienen, an dem dann vom Schwimmer 224 in Abhängigkeit des Füllstands der Druckmittelkammer 214, 216 unterschiedliche große Widerstandswerte eingestellt werden. Füllstandänderungen bewirken damit eine kontinuierliche bzw. stetige Änderung des Ausgangssignals des Sensorelements 226.

Weiterhin ist ein elektronisches Steuergerät 230 vorhanden, welches das jeweilige Ausgangssignal des Sensorelements 226 erfasst und auswertet.

Außerhalb des Druckmittelvorratsbehälters 212 sind die beiden Druckmittelkammern 214, 216 über eine Druckmittelverbindung 232 gekoppelt. In dieser Druckmittelverbindung 232 befindet sich eine Druckmittelfördereinrichtung 234, welche dazu in der Lage ist Druckmittel aus der ersten, kleineren Druckmittelkammer 214 in die zweite, größere Druckmittelkammer 216 des Druckmitttelvorratsbehälters 212 zu fördern um dadurch den Füllstand in der ersten Druckmittelkammer 214 abzusenken.

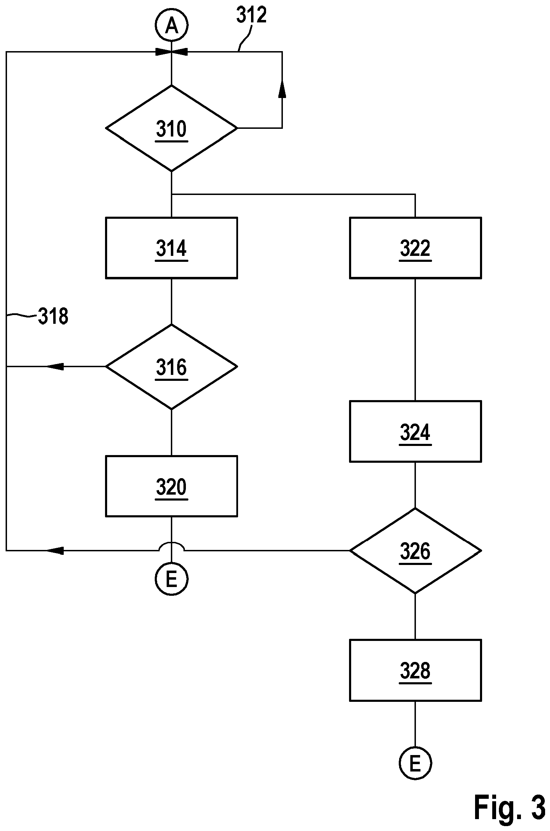

Figur 3 veranschaulicht das in Zusammenhang mit den Figuren 1 und 2 bereits erläuterte Verfahren nochmals anhand ein Ablaufdiagramms.

Zunächst wird in einem ersten Schritt 310 dieses Verfahrens festgestellt, ob der Druckerzeuger des Hydraulikkreises gerade elektronisch angesteuert ist oder nicht in Betrieb ist. Falls der Druckerzeuger in Betrieb ist, wird das Verfahren gemäß dem Pfad 312 beendet und zu einem späteren Zeitpunkt von Neuem gestartet .

Falls der Druckerzeuger nicht aktiv ist erfolgt durch ein elektronisches Steuergerät im zweiten Schritt 314 die Ausgabe eines Ansteuersignals an einen Antriebsmotor des Druckerzeugers und damit dessen Inbetriebnahme. Das Ansteuersignal wird für einen vorgebbaren Zeitraum ausgegeben, wobei dieser Zeitraum bestimmt ist von der Dauer, welche der Druckerzeuger benötigt um den Füllstand in der ersten Druckmittelkammer des Vorratsbehälters bis auf eine Mindestfüllhöhe abzusenken. Er hängt demnach vom vorhandenen Druckmittelvolumen in der Kammer des Druckmittelvorratsbehälters, vom Mindestdruckmittelvolumen sowie von der Fördermenge des Druckerzeugers pro Zeiteinheit und damit letztlich von der Viskosität des Druckmittels ab und ist durch die bekannte geometrische Auslegung des Druckerzeugers und des Druckmittelvorratsbehälters sowie durch die Leitungsquerschnitte bzw. die Umgebungstemperatur bestimmbar bzw. vom elektronischen Steuergerät vorgebbar.

Während des Zeitraums einer Betätigung des Druckerzeugers wird eine Signalprüfung der Füllstandüberwachungseinrichtung (Pos. 316) in einem elektronischen Steuergerät durchgeführt. Dabei wird bei überprüft, ob sich das Signal stetig verändert bzw. ob gegen Ende des Beobachtungszeitraums ein Signalsprung auftritt. Falls eines dieser Ereignisse zutrifft ist von einem ordnungsgemäßen Betriebszustand der Füllstandüberwachungseinrichtung auszugehen und die Ausgabe eines Warnsignals an den Fahrer wird vom elektronischen Steuergerät unterdrückt. Das Verfahren ist damit beendet und wird zu einem späteren Zeitpunkt von Beginn an neu gestartet (Pos.318).

Entspricht der Signalverlauf allerdings nicht diesen Erwartungen liegt ein Funktionsfehler der Füllstandüberwachungseinrichtung vor und es wird gemäß Pos. 320 ein Warnsignal, vorzugsweise ein akustisches, optischen und/oder haptisches Warnsignal wird an den Fahrer abgesetzt.

Das beschriebene Verfahren sollte regelmäßig durchgeführt werden, beispielsweise nach längeren Stillstandzeiten eines Fahrzeugs oder bei jeder neuen Inbetriebnahme eines Antriebs des Fahrzeugs.

In einem zu diesem Verfahrensstrang parallelen Verfahrensstrang wird vom elektronischen Steuergerät das Ausgangssignal der Füllstandüberwachungseinrichtung zum Zeitpunkt vor der elektronischen Ansteuerung des Antriebsmotors des Druckerzeugers erfasst (Pos. 322).

Nach dem Ablauf des Zeitraums einer Betätigung des Druckerzeugers zur Absenkung des Füllstands in der Druckmittelkammer auf den Minimalwert, wird die verstreichende Zeit gemessen (Pos. 324), bis zu der die Füllstandüberwachungseinrichtung wieder dieses Ausgangssignal anzeigt. Dieser Zeitraum gibt somit an, wie lange es dauert bis sich die Druckmittelstände in den wenigstens zwei Druckmittelkammern eines Vorratsbehälters wieder aneinander angeglichen haben. In Kenntnis der Umgebungstemperatur bzw. der Druckmittelviskosität im Neuzustand sowie dem Strömungsquerschnitt der Ausgleichsöffnung in der Trennwand zwischen den Druckmittelkammern des Vorratsbehälters lassen sich aus der Zeitdauer vom elektronischen Steuergerät Rückschlüsse auf die Qualität des Druckmittels ziehen (Pos. 326), wobei unter Qualität des Druckmittels dessen aktuelle Viskosität, dessen Wassergehalt bzw. dessen Verschmutzung etc. verstanden wird. Ggf. kann dann vom elektronischen Steuergerät eine Empfehlung zum Tausch des Druckmittels ausgegeben werden (Pos. 328). Andernfalls wird eine derartige Empfehlung unterdrückt und diese Qualitätsprüfung des Druckmittels wird zu einem späteren Zeitpunkt neu gestartet. Die festgestellte Qualität des Druckmittels kann vom elektronischen Steuergerät 142 bei der Berechnung der Steuersignale zur Einstellung eines Bremsdrucks in dem in Figur 1 gezeigten Bremskreisen 120, 122 durch den Druckerzeuger 114 und die Ventile 132, 134 berücksichtigt werden.

Selbstverständlich sind darüber hinausgehende Änderungen oder Ergänzungen am beschriebenen Ausführungsbeispiel des der Erfindung zugrunde liegenden Verfahrens vorstellbar, ohne vom Grundgedanken der Erfindung abzuweichen.

## Patentansprüche

1. Verfahren zur Funktionsprüfung einer elektromechanischen Füllstandüberwachungseinrichtung (222) in einer ersten Druckmittelkammer (150; 214) eines mittels eines elektronischen Steuergeräts (142; 230) druckregelbaren Druckmittelkreises (120; 122; 210), insbesondere eines Bremskreises einer elektronisch schlupfregelbaren Fahrzeugbremsanlage (110),
wobei der Druckmittelkreis (120; 122; 210) wenigstens eine von der ersten Druckmittelkammer (150; 214) getrennte zweite Druckmittelkammer (146, 148; 216), eine zwischen den Druckmittelkammern (146, 148, 150; 214, 216) bestehende Druckmittelverbindung (232) und eine in der Druckmittelverbindung (232) zwischen den Druckmittelkammern (146, 148, 150; 214, 216) angeordnete elektronisch ansteuerbare Druckmittelfördereinrichtung (114; 234) aufweist,
**dadurch gekennzeichnet,**
**dass** durch Ansteuerung der Druckmittelfördereinrichtung (114; 234) über einen festlegbaren Zeitraum das in der ersten Druckmittelkammer (150; 214) enthaltene Druckmittel in die zweite Druckmittelkammer (146, 148; 216) gefördert wird,
**dass** innerhalb des festgelegten Zeitraums vom elektronischen Steuergerät (142; 230) der Signalverlauf der Füllstandüberwachungseinrichtung (222) erfasst und ausgewertet wird und
**dass** vom elektronischen Steuergerät (142; 230) ein Warnsignal abgegeben wird, wenn im Signalverlauf innerhalb des Zeitraums kein Signalsprung oder keine kontinuierliche Signaländerung feststellbar ist.

2. Verfahren nach Anspruch 1, **dadurch gekennzeichnet,**
**dass** die Ausgabe eines Warnsignals unterdrückt wird, wenn vom elektronischen Steuergerät (142; 230) ein Signalsprung oder eine kontinuierliche Signaländerung festgestellt wurde.

3. Verfahren nach Anspruch 1 oder 2,
**dadurch gekennzeichnet,**
**dass** das Verfahren in regelmäßig wiederkehrenden Abständen durchgeführt wird, insbesondere bei einer Inbetriebnahme des Antriebs des Fahrzeugs.

4. Verfahren nach einem der Ansprüche 1 bis 3, wobei der Druckmittelkreis (120, 122; 210) ein Bremskreis einer elektronisch schlupfregelbaren Fahrzeugbremsanlage (110) ist, welche mit einem Hauptbremszylinder (118), einer Radbremse (112), einem elektronisch ansteuerbaren Kreistrennventil (136) zwischen dem Hauptbremszylinder (118) und der Radbremse (112) und einem elektronisch ansteuerbaren Sperrventil (130) zwischen dem Druckerzeuger (114) und der Radbremse (112) ausgestattet ist, **dadurch gekennzeichnet,**
**dass** zur Durchführung des Verfahrens das Sperrventil (130) und das Kreistrennventil (136) derart vom elektronischen Steuergerät (142) angesteuert werden, dass diese Ventile (130; 136) jeweils ihre Durchlassstellung einnehmen.

5. Verfahren nach einem der Ansprüche 1 bis 4, wobei die beiden Druckmittelkammern (146, 148; 150; 214, 216) über eine Ausgleichsöffnung (220) miteinander kommunizieren, **dadurch gekennzeichnet,**
**dass** nach Ablauf des Zeitraums vom elektronischen Steuergerät (142; 230) die Zeit gemessen wird bis das Signal der Füllstandüberwachungseinrichtung (222) den zu Beginn des Zeitraums vorliegenden Wert annimmt und dass aus der ermittelten Zeit vom elektronischen Steuergerät (142; 230) die Qualität des Druckmittels beurteilt wird.

## Claims

1. Method for testing the correct functioning of an electromechanical fill-level monitoring device (222) in a first pressure medium chamber (150; 214) of a pressure medium circuit (120; 122; 210) that is pressure-controllable by means of an electronic control unit (142; 230), in particular a brake circuit of an electronically slip-controllable vehicle brake system (110),
wherein the pressure medium circuit (120; 122; 210) comprises at least one second pressure medium chamber (146, 148; 216), which is separate from the first pressure medium chamber (150; 214), a pressure medium connection (232) that exists between the pressure medium chambers (146, 148, 150; 214, 216) and an electronically actuable pressure medium conveying device (114; 234) arranged in the pressure medium connection (232) between the pressure medium chambers (146, 148, 150; 214, 216),
**characterized**
**in that** actuation of the pressure medium conveying device (114; 234) over a definable period of time results in the pressure medium contained in the first pressure medium chamber (150; 214) being conveyed to the second pressure medium chamber (146, 148; 216),
**in that** the signal characteristic of the fill-level monitoring device (222) is detected and evaluated by the electronic control unit (142; 230) within the defined period of time, and
**in that** the electronic control unit (142; 230) delivers a warning signal if no sudden signal change or no continuous signal change is identifiable in the signal characteristic within the period of time.

2. Method according to Claim 1, **characterized in that** the output of a warning signal is suppressed if a sudden signal change or a continuous signal change has been identified by the electronic control unit (142; 230).

3. Method according to Claim 1 or 2,
**characterized**
**in that** the method is carried out at regularly recurring intervals, in particular when the drive of the vehicle is started up.

4. Method according to one of Claims 1 to 3, wherein the pressure medium circuit (120, 122; 210) is a brake circuit of an electronically slip-controllable vehicle brake system (110) equipped with a main brake cylinder (118), a wheel brake (112), an electronically actuable circuit isolation valve (136) between the main brake cylinder (118) and the wheel brake (112) and an electronically actuable stop valve (130) between the pressure generator (114) and the wheel brake (112), **characterized**
**in that** the method is carried out by virtue of the stop valve (130) and the circuit isolation valve (136) being actuated by the electronic control unit (142) in such a way that these valves (130; 136) each adopt their open position.

5. Method according to one of Claims 1 to 4, wherein the two pressure medium chambers (146, 148; 150; 214, 216) communicate with one another via an equalization opening (220), **characterized**
**in that** after the period of time has elapsed the electronic control unit (142; 230) measures the time until the signal from the fill-level monitoring device (222) assumes the value available at the beginning of the period of time
and **in that** the quality of the pressure medium is assessed by the electronic control unit (142; 230) on the basis of the ascertained time.

## Revendications

1. Procédé permettant de contrôler le fonctionnement d'un dispositif électromécanique de surveillance de niveau de remplissage (222) dans une première chambre de fluide sous pression (150 ; 214) d'un circuit de fluide sous pression (120; 122; 210), réglable en pression au moyen d'un appareil de commande électronique (142 ; 230), en particulier d'un circuit de freinage d'un système de freinage de véhicule à régulation antipatinage électronique (110),
dans lequel le circuit de fluide sous pression (120; 122; 210) présente au moins une deuxième chambre de fluide sous pression (146, 148; 216), séparée de la première chambre de fluide sous pression (150 ; 214), un raccordement de fluide sous pression (232) existant entre les chambres de fluide sous pression (146, 148, 150 ; 214, 216), et un dispositif de débit de fluide sous pression (114 ; 234) à pilotage électronique, disposé dans le raccordement de fluide sous pression (232) entre les chambres de fluide sous pression (146, 148, 150 ; 214, 216),
**caractérisé en ce que** le pilotage du dispositif de débit de fluide sous pression (114 ; 234) pendant une période de temps définissable permet de débiter le fluide sous pression contenu dans la première chambre de fluide sous pression (150 ; 214) dans la deuxième chambre de fluide sous pression (146, 148 ; 216),
**en ce qu'**à l'intérieur de la période de temps définie, l'appareil de commande électronique (142 ; 230) détecte et analyse le tracé de signal du dispositif de surveillance de niveau de remplissage (222), et
**en ce que** l'appareil de commande (142 ; 230) émet un signal d'alarme si dans le trajet de signal aucun saut de signal ni aucune variation de signal continue ne peut être constaté(e) à l'intérieur de la période de temps.

2. Procédé selon la revendication 1, **caractérisé en ce que** l'émission d'un signal d'alarme est supprimée si l'appareil de commande électronique (142 ; 230) a constaté un saut de signal ou une variation de signal continue.

3. Procédé selon la revendication 1 ou 2, **caractérisé en ce que** le procédé est effectué à des intervalles périodiques, en particulier à la mise en service de l'entraînement du véhicule.

4. Procédé selon l'une quelconque des revendications 1 à 3, dans lequel le circuit de fluide sous pression (120, 122; 210) est un circuit de freinage d'un système de freinage de véhicule à régulation antipatinage électronique (110) qui est équipé d'un maître-cylindre de frein (118), d'un frein de roue (112), d'une soupape de séparation de circuit à pilotage électronique (136) entre le maître-cylindre de frein (118) et le frein de roue (112) et d'une soupape d'arrêt à pilotage électronique (130) entre le générateur de pression (114) et le frein de roue (112),
**caractérisé en ce que** pour l'exécution du procédé, la soupape d'arrêt (130) et la soupape de séparation de circuit (136) sont pilotées par l'appareil de commande électronique (142) de telle sorte que ces soupapes (130; 136) occupent respectivement leur position de passage.

5. Procédé selon l'une quelconque des revendications 1 à 4, dans lequel les deux chambres de fluide sous pression (146, 148; 150; 214, 216) communiquent ensemble par l'intermédiaire d'un orifice d'équilibrage (220), **caractérisé en ce qu'**après l'expiration de la période de temps, l'appareil de commande électronique (142 ; 230) mesure le temps jusqu'à ce que le signal du dispositif de surveillance de niveau de remplissage (222) adopte la valeur présente au début de la période de temps, et **en ce que** l'appareil de commande électronique (142 ; 230) évalue la qualité du fluide sous pression selon le temps établi.
